Europäisches Patentamt

**European Patent Office**

**Office européen des brevets**

(19)

(11) Numéro de publication: **0 177 996**
**B1**

# FASCICULE DE BREVET EUROPÉEN

(45) Date de publication du fascicule du brevet:
**25.01.89**

(21) Numéro de dépôt: **85201422.4**

(22) Date de dépôt: **10.09.85**

(51) Int. Cl.⁴: **F 01 N 1/02,** F 01 N 1/08,
F 01 N 1/14, F 01 N 3/10

(54) Appareillage amortisseur du bruit pour les gaz d'échappement des moteurs à combustion interne.

(30) Priorité: **18.09.84 IT 6793084**

(43) Date de publication de la demande:
**16.04.86 Bulletin 86/16**

(45) Mention de la délivrance du brevet:
**25.01.89 Bulletin 89/4**

(84) Etats contractants désignés:
**BE DE FR GB**

(56) Documents cité:
**DE-C-893 730**
**FR-A-1 318 299**
**FR-A-2 375 449**
**GB-A-1 032 854**
**GB-A-1 094 211**
**GB-A-2 062 487**
**US-A-1 370 456**
**US-A-1 747 876**
**US-A-2 247 130**
**US-A-2 880 079**
**US-A-3 786 895**
**US-A-4 161 509**

(73) Titulaire: **Carboni, Luigi, Via Argentero 2, I-10126
Torino (IT)**
Titulaire: **S.I.V. S.p.A., Frazione Zucche, I-10040
Volvera Torino (IT)**

(72) Inventeur: **Carboni, Luigi, Via Argentero 2, I-10126
Torino (IT)**

(74) Mandataire: **Patrito, Pier Franco, Dr. Ing., Cabinet
PATRITO BREVETTI Via Don Minzoni 14, I-10121
Torino (IT)**

EP 0 177 996 B1

## Description

La présente invention a pour objet un appareillage amortisseur du bruit pour les gaz d'échappement des moteurs à combustion interne, comprenant un silencieux intermédiaire, un silencieux final et des tubulures reliant l'entrée du silencieux intermédiaire au collecteur d'échappement d'un moteur à combustion interne et l'entrée du silencieux final à la sortie du silencieux intermédiaire.

Des appareillages amortisseurs du bruit de ce genre trouvent un large emploi dans les véhicules automobiles parce que généralement ils sont plus efficaces et plus faciles à installer que les silencieux en un corps unique; cependant, dans les formes connues, ils ont quelques inconvénients. Avant tout, les silencieux faisant partie de l'appareillage sont normalement formés par des récipients contenant des matériaux absorbants qui, quand ils sont traversés par le flux des gaz d'échappement, donnent lieu à des pertes de charge considérables et, par conséquent, à une considérable contre-pression à l'échappement du moteur, ce qui réduit le rendement de ce moteur. Souvent les silencieux sont efficaces dans l'atténuation de certains intervalles de fréquence du bruit d'échappement du moteur, tandis qu'ils n'exercent pas une action d'atténuation suffisante sur d'autres intervalles de fréquence. De plus, tandis que normalement le silencieux intermédiaire trouve facilement place dans la structure d'un véhicule, le silencieux final pose souvent des problèmes pour son installation, spécialement dans les petits véhicules, à cause des dimensions qu'il doit avoir pour être efficace. Enfin, dans les réalisations habituelles, les silencieux n'exercent aucune action d'épuration sur les gaz d'échappement, lesquels se répandent dans le milieu dans une condition plus ou moins insonorisée, mais avec leur contenu tout entier de substances contaminantes, spécialement monoxyde de carbone, oxydes de soufre et d'azote, hydrocarbures imbrûlés et residus solides pulvérulents.

Le but principal de la présente invention est de perfectionner les appareillages amortisseurs du bruit du type indiqué, spécialement dans le sens de réduire la contre-pression à l'échappement du moteur, d'assurer une atténuation suffisante de toutes les fréquences formant le bruit d'échappement du moteur, et de réduire considérablement l'encombrement du silencieux final, en facilitant ainsi d'une façon substantielle son installation sur n'importe quel type de véhicule. Un autre but de l'invention est encore de rendre possible, d'une façon économique, l'application de mesures capables de conférer à l'appareillage amortisseur du bruit aussi des capacités d'épuration des gaz d'échappement.

Ce but est atteint, selon l'invention, principalement par le fait que, dans un appareillage amortisseur du bruit du type indiqué, le silencieux final comprend, dans une enveloppe, une pluralité d'éléments annulaires espacés, intersectés par des cloisons radiales, définissant des séries de chambres qui occupent la portion périphérique de l'enveloppe et s'ouvrent vers la portion axiale de celle-ci, cette portion axiale étant laissée substantiellement libre pour le passage du flux des gaz d'échappement; lesdits éléments annulaires et cloisons étant rangés en plusieurs groupes successifs définissant des sections ayant des caractéristiques différentes entre elles.

Grâce a cette caractéristique, les ondes de pression préalablement atténuées en partie par le silencieux intermédiaire, lesquelles accompagnent l'écoulement dans le silencieux final du gaz d'échappement, lui-même déjà sensiblement régularisé par le silencieux intermédiaire, se dispersent dans les chambres qui forment une espèce de cages acoustiques à la périphérie de l'enveloppe du silencieux final, et y subissent une atténuation définitive par réflexion et par réfraction, tandis que la masse du flux des gaz d'échappement peut parcourir la portion axiale du silencieux final sans rencontrer aucune résistance substantielle. De cette façon on obtient une réduction considérable de la contre-pression exercée par l'appareillage amortisseur du bruit à l'échappement du moteur, tandis qu'en projetant d'une façon appropriée les chambres formant les cages acoustiques, et en les divisant en des groupes de dimensions différentes, on obtient la possibilité d'étendre l'intervalle d'atténuation efficace substantiellement au spectre de fréquences tout entier contenu dans le bruit d'échappement du moteur. On constate, en pratique, qu'un dispositif de ce type peut être réalisé efficacement avec des dimensions très limitées par rapport à celles d'un silencieux final habituel. En outre, en réalisant les éléments annulaires et/ou les cloisons radiales en des matériaux appropriés, spécialement en cuivre ou en alliages de cuivre, capables d'exercer une action catalytique sur les substances imbrûlées et sur les oxydes de carbone, d'azote et de soufre, il devient possible de conférer au silencieux aussi des caractéristiques efficaces d'épuration des gaz d'échappement.

Une réduction ultérieure des résistances à l'écoulement peut être obtenue par un montage élastique desdits éléments annulaires, qui en autorise des déplacements longitudinaux, et par l'installation d'une hélice carenée, disposée à l'extrémité finale du dispositif et agissant en partie sur le flux des gaz d'échappement et en partie sur un flux d'air amblent additionnel.

L'invention concerne aussi un silencieux intermédiaire particulier pour l'appareillage amortisseur du bruit ayant les caractéristiques sus-dites, lequel est particulièrement approprié pour permettre d'exploiter de la meilleure façon les propriétés du silencieux final, même si chacun de ces deux silencieux pourrait aussi recevoir utilisation individuelle.

Ces caractéristiques et d'autres et les avantages de l'objet de l'invention ressortiront plus clairement de la suivante description d'une forme de réalisation, donnée à titre d'exemple non limitatif, représentée schématiquement dans les dessins annexés, dans lesquels:

Fig. 1 montre en vue de l'extérieur et à une échelle réduite le silencieux intermédiaire de l'appareillage;

Fig. 2 en montre une coupe transversale, faite selon la ligne II-II de la figure 1;

Fig. 3 en montre une coupe longitudinale, faite selon la ligne III-III de la figure 2;

Fig. 4 en est une vue en plan, à moitié en coupe selon la ligne IV-IV de la figure 2 et avec certaines parties internes interrompues;

Fig. 5 représente en vue de l'extérieur, à la même échelle que la figure 1, le silencieux final de l'appareillage;

Figs. 6 et 7 montrent, à une échelle plus grande, une coupe longitudinale des parties respectivement avant et arrière de l'enveloppe du silencieux final selon la fig. 5, avec certains composants internes coupés dans la moitié supérieure et montrés en vue dans la moitié inférieure;

Figs. 8 à 10 montrent des coupes faites respectivement selon les lignes VII-VIII, IX-IX et X-X de la figure 6; et

Fig. 11 est une vue de face d'un élément annulaire élastique de retenue.

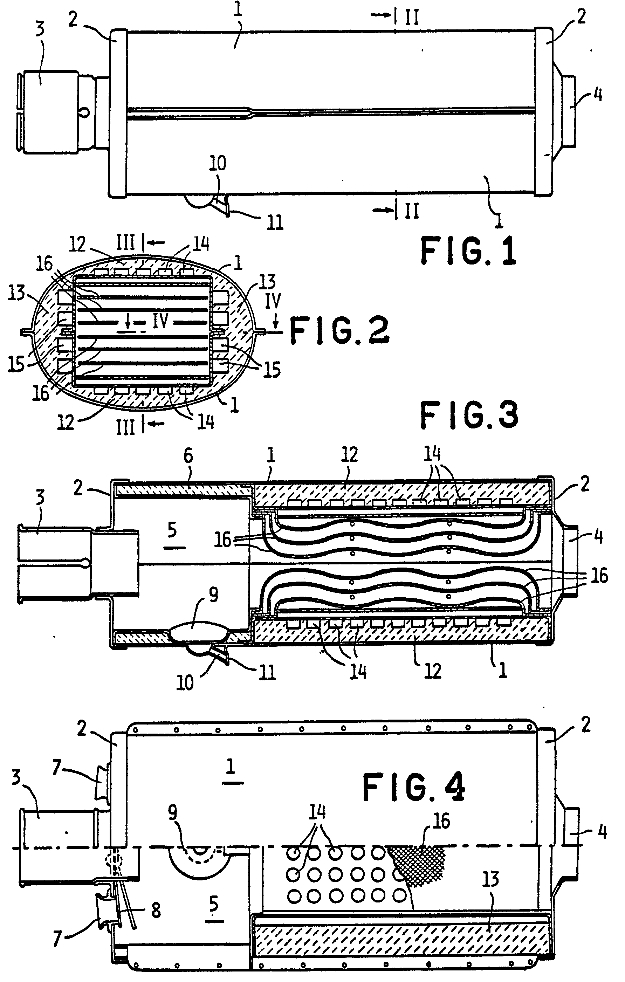

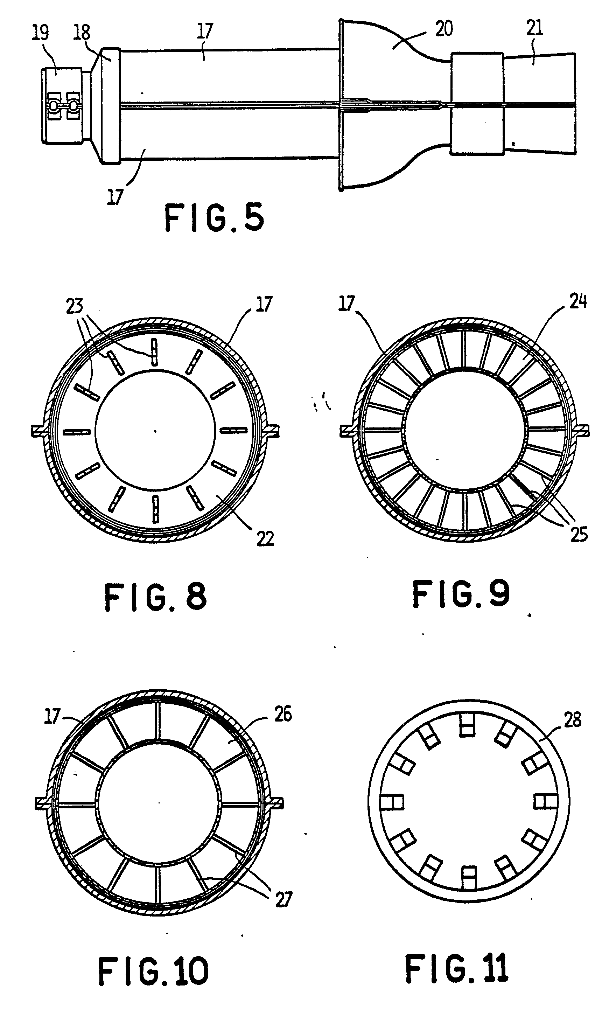

En faisant référence d'abord aux figures 1 à 4, le silencieux intermédiaire de l'appareillage comprend une enveloppe formée par deux coques 1, lesquelles définissent dans leur ensemble un cylindre elliptique. Ce cylindre est fermé par deux bouts 2, l'un desquels porte un raccord d'entrée 3 et l'autre porte un raccord de sortie 4. Le raccord d'entrée 3 est destiné à être relié, moyennant une tubulure connue en soi et non représentée, au collecteur d'échappement d'un moteur à combustion interne, tandis que le raccord de sortie 4 est destiné à être relié moyennant une autre tubulure, elle aussi bien connue et non représentée, au silencieux final représenté dans les figures 5 à 11.

Le raccord d'entrée 3 débouche dans une chambre d'expansion 5 formée dans l'enveloppe 1 et isolée périphériquement par une double parois renfermant un remplissage isolant 6. Dans la chambre 5 débouchent aussi deux prises d'air 7 pourvues de soupapes d'aspiration unidirectionnelles à lame 8. Dans le fond de la chambre 5 est disposé un petit puits d'écoulement 9 qui s'ouvre à l'extérieur et vers le bas par un débouché 10 fermé par une légère soupape d'échappement unidirectionnelle à lame 11. En aval de la chambre d'expansion 5 l'enveloppe 1 présente un passage de section rectangulaire s'étendant jusqu'au raccord de sortie 4. Ce passage est délimité par des parois 12 et 13 faites en un matériau isolant thermoacoustique, de préférence un mélange de ponce et de fibres de silice du type connu dans le commerce comme siltex. Les parois 12 et 13 présentent dans leur surface intérieure une pluralité d'évidements, respectivement 14 et 15, de dimensions différentes. Les surfaces internes des parois 12 et 13 sont protegées par des feuilles de tôle perforée ou par un grillage métallique.

Dans le passage de section rectangulaire ainsi défini par les parois 12 et 13 s'étendent en direction longitudinale, substantiellement parallèles entre eux, des éléments élastiques ondulés 16 formés par une tôle perforée ou par un grillage métallique.

Le fonctionnement de ce silencieux intermédiaire est le suivant. Le flux pulsatoire des gaz d'échappement du moteur, venant du collecteur d'échappement, pénètre à travers le raccord d'entrée 3 dans la chambre 5, dans laquelle il se détend et il établit un régime oscillatoire de pressions. Pendant les périodes de basse pression de ces oscillations, les soupapes d'aspiration 8 autorisent l'entrée d'air ambient froid. A cause soit de l'expansion, soit de cette injection d'air froid, une partie considérable de la vapeur d'eau contenue dans les gaz d'échappement se condense, en capturant et en incorporant la plus grande partie des résidus pulvérulents transportés par les gaz d'échappement et en faisant dissoudre une partie des oxydes de soufre et d'azote contenus dans ces gaz. La vapeur condensée se rassemble dans le puits 9 d'où, pendant les périodes de haute pression des oscillations, elle se décharge à l'extérieur à travers le débouché 10, en vainquant la légère force de la soupape à lame 11. Les impuretés ainsi déchargées à l'état liquide tombent sur le terrain et elles ne se répandent pas dans le milieu. Les gaz d'échappement avancent ensuite au-delà de la chambre d'expansion 5, privés d'une bonne part de la vapeur d'eau et des impuretés qu'ils contenaient, et quelque peu augmentés en volume à cause de l'air ambient aspiré à travers les prises d'air 7.

En sortant de la chambre d'expansion 5, les gaz d'échappement sont accélérés par la réduction de la section de passage, et le flux est rendu laminaire par la présence des éléments ondulés et perforés 16. Ces éléments, sous l'action des impulsions imprimées par les gaz d'échappement, flottent élastiquement et sont donc capables d'atténuer efficacement les fréquences plus hautes du bruit d'échappement, tout sans freiner excessivement l'écoulement des gaz. En même temps, les évidements 14 et 15 formés dans les parois 12 et 13 réalisent une atténuation des fréquences plus basses du bruit d'échappement. De cette façon, les gaz d'échappement arrivent au raccord de sortie 4,.et ils s'acheminent vers le silencieux final, dans un état déjà considérablement régularisé et avec un bruit atténué, c'est-à-dire en des conditions appropriées pour recevoir une action soigneuse de réduction finale du bruit. La présence des éléments ondulés et perforés 16 donne lieu aussi à la séparation d'une bonne part des matières pulvérulentes transportées par les gaz, lesquelles se rassemblent dans la partie inférieure de l'enveloppe 1.

Le silencieux final représenté dans les figures 5 à 11 comprend une enveloppe cylindrique formée par des coques 17 et fermée, à l'une de ses extrémités, par un bout 18 supportant un raccord d'entrée 19. Ce raccord est destiné à être relié par une tubulure, déjà mentionnée, au raccord de sortie 4 d'un silencieux intermédiaire, de préférence celui représenté dans les figures 1 à 4. A l'extrémité opposée l'enveloppe 17 se termine en s'effilant dans une prise d'air 20, laquelle à son tour se termine dans la partie arrière par une tuyère de décharge 21 s'ouvrant dans le milieu.

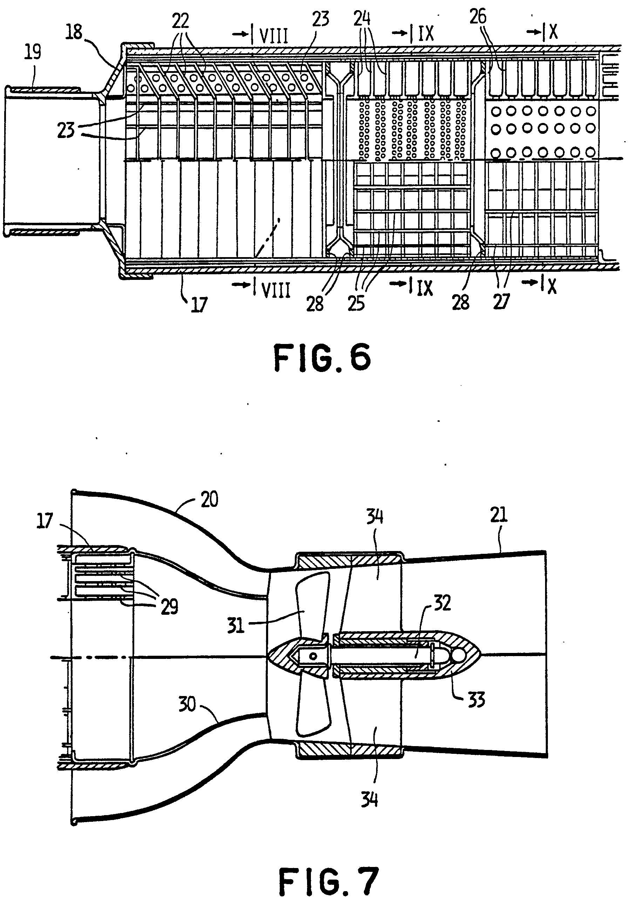

L'espace interne de l'enveloppe 17 est divisé en plusieurs sections successives. La première section comprend une succession d'éléments annulaires tronconiques 22 ayant chacun un collier périphérique cylindrique, tournés vers l'intérieur avec leur inclinaison conforme au sens d'écoulement des gaz d'échappement, et intersectés par une pluralité de cloisons perforées 23 (figures 6 et 8). Ces éléments 22 définissent une série de chambres annulaires partiellement divisées par les cloisons perforées 23. La deuxième section comprend une succession d'éléments annulaires plats 24 ayant sur leur périphérie interne des colliers cylindriques perforés, intersectés par une pluralité de cloisons 25 (figures 6 et 9). Ces éléments 24 et 25 définissent une série de chambres en secteur qui s'ouvrent vers l'intérieur à travers les perforations des colliers des éléments 24. La troisième section comprend des éléments annulaires plats 26 et des cloisons 27 (figures 6 et 10), substantiellement similaires de ceux de la deuxième section, desquels ils diffèrent par le diamètre des perforations, qui est plus grand que celui des perforations de la deuxième section, et par le nombre de cloisons 27, qui est plus petit que celui des cloisons 25, de sorte que les chambres en secteur formées dans la troisième section ont des dimensions plus grandes que celles de la deuxième section et sont en communication avec le passage intérieur à travers des trous plus grands. Les éléments annulaires des trois sections décrites sont retenus en place par des éléments annulaires élastiques 28 (figures 6 et 11)) qui autorisent des déplacements élastiques des éléments sur une petite longueur dans la direction longitudinale.

En correspondance avec ces trois sections du silencieux final, le flux des gaz d'échappement passe, sans rencontrer aucune résistance sensible, dans le passage axial libre défini par les différents éléments annulaires, mais les oscillations de pression formant les ondes sonores du bruit qui accompagne encore l'écoulement se dispersent dans les cages acoustiques formées par les différentes chambres annulaires et en secteur, en s'atténuant fortement à cause des réflexions, réfractions et interférences répétées qui se produisent, tandis qu'en même temps les éléments annulaires sont à même de céder élastiquement, dans certaines limites, aux ondes de pression, en réduisant ainsi d'une façon substantielle l'importance des phénomènes dissipatifs et en maintenant à la valeur la plus réduite possible la résistance opposée au flux des gaz d'échappement. Grâce aux dimensions différentes des chambres définies par les éléments annulaires et par les cloisons respectives dans les différentes sections, ainsi qu'aux dimensions différentes des perforations relatives, ce système agit efficacement dans un ample intervalle de fréquences, qu'on peut faire correspondre au spectre de fréquences tout entier présenté par le bruit d'échappement, en évitant ainsi que certains groupes de fréquences seulement soient atténués efficacement, comme il arrive d'habitude avec les silencieux connus.

Après la troisième section décrite, les gaz d'échappement passent à travers une quatrième section (figure 7) comprenant un groupe d'éléments cylindriques 29 coaxiaux entr'eux et à l'enveloppe 17, perforés et disposés à des distances radiales réciproques qui se réduisent graduellement en allant de l'intérieur vers l'extérieur. Cette quatrième section élimine les composants du bruit qui restent encore après le passage des gaz à travers les sections précédentes. Enfin, le flux rencontre une conduite convergente ogivale 30 qui le dirige vers la région centrale d'une hélice 31 dont l'arbre 32 est monté fou dans un coussinet 33 supporté par des ailettes radiales longitudinales 34. Celles-ci sont supportées à leur tour par la tuyère de décharge 21 par laquelle se termine la prise d'air 20 entourant annulairement l'enveloppe 17. La région périphérique de l'hélice 31 agit sur le flux d'air additionnel parcourant ladite prise d'air 20.

Puisque l'hélice 31 intéresse simultanément le flux des gaz d'échappement venant de la conduite 30 et le flux d'air parcourant la prise d'air 20, cette hélice 31 est mise en mouvement par les gaz d'échappement et pousse le flux d'air additionnel, en diluant les gaz d'échappement avant leur introduction dans l'atmosphère et en produisant autour d'eux un flux tubulaire d'air qui, en les isolant partiellement du milieu, en favorise une déchgarge silencieuse. Cependant, quand l'appareillage est monté sur un véhicule et celui-ci marche à une vitesse élevée, le flux d'air dans la prise d'air 20 s'établit spontanément par effet du vent de la course et il entraîne l'hélice 31, laquelle alors pousse à son iour le flux des gaz d'échappement, en réduisant d'une façon considérable la contre-pression à l'échappement du moteur et en augmentant ainsi le rendement de ce dernier.

De préférence, certains des composants internes du silencieux final sont en cuivre, en alliage de cuivre ou en un autre matériau ayant des propriétés catalytiques à l'égard des substances imbrûlées et/ou aux oxydes de carbone, d'azote et/ou de soufre contenus dans les gaz d'échappement. Particulièrement avantageuse est la réalisation en cuivre de ceux parmi les éléments annulaires 22 qui se trouvent dans la région dans laquelle les gaz d'échappement ont une température plus élevée et sont donc plus sensibles à l'action catalytique. Par cet artifice, qui grâce à la conformation des éléments annulaires peut être réalisé facilement et économiquement, il est possible de conférer à l'appareillage amortisseur du bruit une capacité d'épuration très appréciable.

Pour l'adaptation des performances de l'appareillage aux exigences de moteurs de cylindrée différente, les silencieux peuvent être réalisés en des dimensions différentes, ou bien, au besoin, deux ou plus de deux silencieux peuvent être insérés en parallèle. Naturellement, le dimensionnement spécifique des parties dépend aussi de la vitesse de fonctionnement normal et du nombre de cylindres du moteur auquel l'appareillage est destiné, ceux-ci étant les paramètres desquels le spectre de fréquences des gaz d'échappement dépend.

L'appareillage peut être employé soit pour des moteurs fixes, soit pour des moteurs installés sur des véhicules, mais il est spécialement indiqué pour ces derniers moteurs en considération de la poussée utile à la propulsion, fournie par la décharge des gaz d'échappement à travers la tuyère 21, ainsi que de l'aspiration des gaz d'échappement effectuée moyennant l'hélice 31 par le flux d'air additionnel dans la prise d'air 20, une fonction cette dernière qui, bien entendu, ne pourrait pas avoir lieu dans les moteurs fixes.

**Revendications**

1. Appareillage amortisseur du bruit pour les gaz d'échappement des moteurs à combustion interne, comprenant un silencieux intermédiaire (1 - 16), un silencieux final (17 - 34) et des tubulures reliant l'entrée (3) du silencieux intermédiaire au collecteur d'échappement d'un moteur à combustion interne et l'entrée (19) du silencieux final à la sortie (4) du silencieux intermédiaire, caractérisé en ce que le silencieux final (17 - 34) comprend, dans une enveloppe (7), une pluralité d'éléments annulaires espacés (22, 24, 26), intersectés par des cloisons radiales (23, 25, 27), définissant des séries de chambres qui occupent la portion périphérique de l'enveloppe (17) et qui s'ouvrent vers la portion axiale de celle-ci, cette portion axiale étant laissée substantiellement libre pour le passage du flux des gaz d'échappement; lesdits éléments annulaires (22, 24, 26) et cloisons (23, 25, 27) étant rangés en plusieurs groupes successifs (22 - 23, 24 - 25, 26 - 27) définissant des sections ayant des caractéristiques différentes entre elles.

2. Appareillage amortisseur du bruit selon la revendication 1, caractérisé en ce que le silencieux intermédiaire (1 - 16) comprend une chambre d'expansion (5) présentant dans sa paroi frontale (2) au moins une soupape undirectionnelle d'aspiration (7 - 8) communiquant avec le milieu, et présentant dans sa paroi (1) inférieure un puits (9) avec un débouché de décharge (10).

3. Appareillage amortisseur du bruit selon la revendication 2, caractérisé en ce que le silencieux intermédiaire (1 - 16) comprend, en aval de ladite chambre d'expansion (5), une chambre d'atténuation acoustique dont les parois (12, 13) sont réalisées en un matériau isolant thermoacoustique présentant des évidements (14, 15), et comprend, dans le passage défini entre lesdites parois (12, 13), une pluralité d'éléments élastiques ondulés et perforés (16), substantiellement parallèles, s'étendant dans la direction longitudinale de la chambre d'atténuation.

4. Appareillage amortisseur du bruit selon la revendication 1, caractérisé en ce qu'au moins un groupe (22) desdits éléments annulaires (22, 24, 26) est formé par des éléments annulaires tronconiques (22) avec collier périphérique cylindrique, disposés avec leur inclinaison vers le centre conforme au sens du flux des gaz d'échappement, et intersectés par des cloisons perforées (23).

5. Appareillage amortisseur du bruit selon la revendication 4, caractérisé en ce que lesdits éléments annulaires (22) de forme tronconique sont réalisés en un matériau ayant des propriétés catalytiques à l'égard des substances imbrûlées et/ou des oxydes de carbone, d'azote et/ou de soufre, tels que particulièrement le cuivre et les alliages de cuivre.

6. Appareillage amortisseur du bruit selon la revendication 1, caractérisé en ce qu'au moins un groupe (24, 26) desdits éléments annulaires (22, 24, 26) est constitué par des éléments annulaires plats (24, 26) portant sur leur périphérie interne un collier cylindrique perforé.

7. Appareillage amortisseur du bruit selon la revendication 6, caractérisé en ce que le silencieux final (17 - 34) comprend au moins deux groupes (24, 26) d'éléments annulaires plats (24, 26) avec collier interne perforé, ayant un nombre différent de cloisons (25, 27) et des perforations de diamètres différents dans les collers.

8. Appareillage amortisseur du bruit selon la revendication 1, caractérisé en ce que lesdits groupes d'éléments annulaires espacés (22, 24, 26) sont retenus en place par des éléments élastiques (28) disposés de sorte à permettre des déplacements élastiques limités des éléments annulaires (22, 24, 26) dans la direction longitudinale.

9. Appareillage amortisseur du bruit selon la revendication 1, caractérisé en ce que le silencieux final (17 - 34) comprend en outre, en aval des éléments annulaires espacés (22, 24, 26) et des cloisons (23, 25, 27), un groupe d'éléments cylindriques coaxiaux perforés (29), s'étendant longitudinalement dans la portion périphérique de l'enveloppe (17) et ayant des distances radiales réciproques qui se réduisent graduellement en allant du centre vers la périphérie.

10. Appareillage amortisseur du bruit selon la revendication 1, caractérisé en ce que le silencieux final (17 - 34) comprend, dans sa partie finale, une hélice folle (31), dont la portion centrale est disposée en correspondance du passage des gaz d'échappement, tandis que la portion périphérique est située en correspondance d'un passage annulaire (21) connecté dans sa partie antérieure à une prise d'air additionnel (20), lesdits passages confluant en aval de l'hélice (31).

11. Appareillage amortisseur du bruit selon la revendication 10, caractérisé en ce que le passage pour les gaz d'échappement présente, en amont de ladite hélice (31), une portion ogivale (30) convergente, et qu'en aval de ladite hélice (31) sont disposées des ailettes radiales longitudinales (34).

12. Appareillage amortisseur du bruit selon la revendication 2, caractérisé en ce que ledit débouché de décharge (10) du puits inférieur (9) est pourvu d'une légère soupape unidirectionnelle de décharge (11).

13. Appareillage amortisseur du bruit selon la revendication 2, caractérisé en ce que lesdits évidements (14, 15) formés dans les parois (12, 13) en matériau isolant comprennent différents groupes d'évidements (14 et 15) de dimensions différentes.

14. Appareillage amortisseur du bruit selon la revendication 2, caractérisé en ce que le matériau isolant formant lesdites parois (12, 13) est un mélange de ponce et de fibres de silice du type denommé siltex.

## Claims

1. A silencing system for exhaust gases from internal combustion engines, comprising a intermediate silencing device (1 - 16), a final silencing device (17 - 34) and pipings for connecting the inlet (3) of the intermediate silencing device to the exhaust manifold of an internal combustion engine and the inlet (19) of the final silencing device to the outlet (4) of the intermediate silencing device, characterized in that the final silencing device (17 - 34) comprises, within an envelope (17), a number of spaced annular members (22, 24, 26), intersected by radial partition walls (23, 25, 27), forming series of chambers which occupy the peripheral portion of the envelope (17) and open towards the axial portion of this latter by leaving said axial portion substantially free for passage of the flow of exhaust gases; said annular members (22, 24, 26) and partition walls (23, 25, 27) being comprised in a plurality of successive groups (22 - 23, 24 - 25, 26 - 27) which define sections having different characteristics.

2. A silencing system as claimed in Claim 1, characterized in that the intermediate silencing device (1 - 16) comprises an expansion chamber (5) having in its front end wall (2) at least one unidirectional suction valve (7 - 8) communicating with the ambient, and having in its bottom wall (1) a trap (9) provided with a discharge opening (10).

3. A silencing system as claimed in Claim 2, characterized in that the intermediate silencing device (1 - 16) comprises, downstream said expansion chamber (5), an acoustical attenuation chamber whose walls (12, 13) are made of a thermoacoustical insulating material and are provided with recesses (14, 15) formed therein, and within the passage defined between these walls (12, 13) a number of waved and perforated elastic members (16) substantially parallel to each other, extending in the longitudinal direction of the attenuation chamber.

4. A silencing system as claimed in claim 1, characterized in that at least one group (22) of said annular members (22, 24, 26) is formed by annular members (22) each having the shape of a frustum of cone with a peripheral cylindrical collar, disposed with their inclination towards the center consistent with the flow direction of the exhaust gases, and intersected by perforated partition walls (23).

5. A silencing system as claimed in Claim 4, characterized in that said annular members (22) having the shape of a frustum of cone are made of a material having catalytic properties in respect of the unburnt substances and/or the carbon, nitrogen and/or sulphur oxides, such as particularly copper and copper alloys.

6. A silencing system as claimed in claim 1, characterized in that at least a group (24, 26) of said annular members (22, 24, 26) is formed by plane annular members (24, 26) each provided at its inner periphery with a perforated cylindrical collar.

7. A silencing system as claimed in Claim 6, characterized in that the final silencing device (17 - 34) comprises at least two groups (24, 26) of plane annular members (24, 26) with perforated inner collars, the annular members of said two groups having a different number of partition walls (25, 27) and their collars having perforations of different diameters.

8. A silencing system as claimed in Claim 1, characterized in that said groups of spaced annular members (22, 24, 26) are retained in position by elastic members (28) arranged to allow the annular members (22, 24, 26) limited elastic displacements in a longitudinal direction.

9. A silencing system as claimed in Claim 1, characterized in that the final silencing device (17 - 34) further comprises, downstream said spaced annular members (22, 24, 26) and partition walls (23, 25, 27), a group of coaxial perforated cylindrical members (29) extending longitudinally in the peripheral portion of the envelope (17) and having mutual radial distances which are gradually decreasing from the center towards the periphery.

10. A silencing system as claimed in Claim 1, characterized in that the final silencing device (17 - 34) comprises, in its final portion, an idle fan (31) whose central portion is disposed in register with the passage for the exhaust gases, whilst the peripheral portion of the fan is disposed in register with an annular passage (21) frontally connected to an additional air intake (20), both said passages joining behind the fan (31).

11. A silencing system as claimed in Claim 10, characterized in that the passage of the exhaust gases has, upstream said fan (31), a convergent ogival portion (30), and that downstream said fan (31) there are provided longitudinal radial tongues (34).

12. A silencing system as claimed in claim 2, characterized in that said outlet opening (10) of the bottom trap (9) is provided with a light unidirectional discharge valve (11).

13. A silencing system as claimed in claim 2, characterized in that said recesses (14, 15) formed in the walls (12, 13) made of an insulating material comprise various groups of recesses (14 and 15) of different size.

14. A silencing system as claimed in claims 2, characterized in that the insulating material of which said walls (12, 13) are made is a mixture of pumice with silica fibres, of a type commercially called siltex.

**Patentansprüche**

1. Abgasschalldämpfungsanlage für Verbrennungsmotoren, mit einem Zwischenschalldämpfer (1 - 16), einem Endschalldämpfer (17 - 34) und Leitungen, die den Eintritt (3) zum Zwischenschalldämpfer mit dem Auspuffkrümmer eines Verbrennungsmotors und den Eintritt (19) zum Endschalldämpfer mit dem Austritt (4) des Zwischenschalldämpfers verbinden, dadurch gekennzeichnet, dass der Endschalldämpfer (17 - 34) in einem Gehäuse (17) mehrere in Abstand voneinander angeordnete ringförmige Elemente (22, 24, 26) umfasst, die durch radiale Trennwände (23, 25, 27) geschnitten sind, die Reihen von Kammern bilden, welche sich im Umfangsbereich des Gehäuses (17) befinden und sich in Richtung des Axialbereiches desselben öffnen, wobei dieser Axialabschnitt für den Durchfluss des Abgasstromes im wesentlichen frei gelassen wird und die ringförmige Elemente (22, 24, 26) sowie die Trennwände (23, 25, 27) in mehrere aufeinanderfolgende Gruppen (22 - 23, 24 - 25, 26 - 27) zusammengestellt sind und Abschnitte mit sich voneinander unterscheidenden Eigenschaften bilden.

2. Schalldämpfungsanlage nach Anspruch 1, dadurch gekennzeichnet, dass der Zwischenschalldämpfer (1 - 16) einen Entspannungsraum (5) aufweist, der an seiner Stirnwand (2) wenigstens ein Einweg-Einlassventil (7 - 8), das mit der Umgebung in Verbindung steht, und in seiner unteren Wand (1) einen Schacht (9) mit Auslassöffnung (10) aufweist.

3. Schalldämpfungsanlage nach Anspruch 2, dadurch gekennzeichnet, dass der Zwischenschalldämpfer (1 - 16) nach dem Entspannungsraum (5) einen Schalldämpfungsraum, dessen Wände (12, 13) aus einem Wärme- und Schallschutzstoff mit Aushöhlungen (14, 15) bestehen, und in dem durch die Wände (12, 13) gebildeten Gang mehrere gewellte und gelochte, elastische Elemente (16) aufweist, die im wesentlichen parallel zueinander verlaufen und sich in Längsrichtung des Dämpfungsraumes erstrecken.

4. Schalldämpfungsanlage nach Anspruch 1, dadurch gekennzeichnet, dass wenigstens eine Gruppe (22) der ringförmigen Elemente (22, 24, 26) aus ringförmigen Kegelstumpfelementen (22) mit einem zylinderförmigen Umfangsbund besteht, die mit ihrer Neigung nach der der Richtung des Abgasstromes entsprechenden Mitte hin angeordnet und von gelochten Trennwänden (23) durchgeschnitten sind.

5. Schalldämpfungsanlage nach Anspruch 4, dadurch gekennzeichnet, dass die ringförmige Kegestumpfelemente (22) aus einem Material hergestellt sind, das gegenüber den unverbrannten Stoffen und/oder den Kohlen-, Stickstoff- und/oder Schwefeloxyden, wie insbesondere Kupfer und Kupferlegierungen, katalytische Eigenschaften hat.

6. Schalldämpfungsanlage nach Anspruch 1, dadurch gekennzeichnet, dass wenigstens eine Gruppe (24 - 26) der ringförmigen Elemente (22, 24, 26) aus flachen ringförmigen Elementen (24, 26) besteht, die an ihrem Umfang einen zylinderförmigen gelochten Bund tragen.

7. Schalldämpfungsanlage nach Anspruch 6, dadurch gekennzeichnet, dass der Endschalldämpfer (17 - 34) wenigstens zwei Gruppen (24, 26) von flachen ringförmigen Elementen (24, 26) mit gelochtem Innenbund aufweist, die eine unterschiedliche Anzahl Trennwände (25, 27) haben und deren Bünde Löcher mit unterschiedlichem Durchmesser besitzen.

8. Schalldämpfungsanlage nach Anspruch 1, dadurch gekennzeichnet, dass die Gruppen der in Abstand voneinander angeordneten ringförmigen Elemente (22, 24, 26) durch elastiche Elemente (28) gehalten werden, die so angeordnet sind, dass sie den ringförmigen Elementen (22, 24, 26) bestimmte elastische Bewegungen in Längsrichtung gestatten.

9. Schalldämpfungsanlage nach Anspruch 1, dadurch gekennzeichnet, dass der Endschalldämpfer (17 - 34) nach den in Abstand voneinander angeordneten, ringförmigen Elementen (22, 24, 26) und nach den Trennwänden (23, 25, 27) auch eine Gruppe von koaxialen, gelochten und zylinderförmigen Elementen (29) umfasst, die sich in Längsrichtung im Umfangsbe reich des Gehäuses (17) erstrecken und deren gegenseitige radiale Abstände sich allmählich verringern, während sie von der Mitte zum Umfang hin Verlaufen.

10. Schalldämpfungsanlage nach Anspruch 1, dadurch gekennzeichnet, dass der Endschalldämpfer (17 - 34) in seinem Endteil eine Losschraube (31) aufweist, deren mittlerer Teil in, Bereich der Führung der Abgase liegt, während sich der Umfangsteil im Bereich einer ringförmigen Führung (21) befindet, der vorne mit einer Zusätzlichen Ansaughutze (20) verbunden ist, und dass diese Führungen hinter der Schraube (31) zusammenlaufen.

11. Schalldämpfungsanlage nach Anspruch 10, dadurch gekennzeichnet, dass die Führung der Abgase vor der Schraube (31) einen kegelförmig konvergenten Abschnitt (30) aufweist und dass nach der Schraube (31) radiale Längsflügel (34) angeordnet sind.

12. Schalldämpfungsanlage nach Anspruch 2, dadurch gekennzeichnet, dass die Auslassöffnung (10) des unteren Schachtes (9) ein leichtes Einweg-Auslassöffnung (11) aufweist.

13. Schalldämpfungsanlage nach Anspruch 2, dadurch gekennzeichnet, dass die Aushöhlungen (14, 15) der Wände (12, 13) aus Isolierstoff mehrere Gruppen von Aushöhlungen (4 und 15) mit unterschiedlichen Abmessungen umfassen.

14. Schalldämpfungsanlage nach Anspruch 2, dadurch gekennzeichnet, dass es sich bei dem Isolierstoff, aus dem die Wände (12, 13) bestehen, um eine Bimsbindung mit Kieselsäurefasern des sogenannten Siltex-Typ handelt.

FIG.1

FIG.2

FIG.3

FIG.4

FIG. 5

FIG. 8

FIG. 9

FIG. 10

FIG. 11

... 

# EP 0 177 996 B1

FIG.6

FIG.7